# EUROPÄISCHE PATENTSCHRIFT

(11) **EP 0 497 322 B1**
(45) Veröffentlichungstag und Bekanntmachung des Hinweises auf die Patenterteilung: **02.11.1994**
(21) Anmeldenummer: 92101482.5
(22) Anmeldetag: 29.01.1992
(51) Int. Cl.: B23K 20/12, B29C 65/06

(54) **Blattfederanordnung für den Schwingkopf einer Vibrations-Schweissmaschine**
Blade spring arrangement for the oscillation head of a vibration-welding machine
Dispositif de ressort à lames pour la tête oscillante d'une machine de soudage à vibrations

(30) Priorität: 30.01.1991 DE 4102750
(43) Veröffentlichungstag der Anmeldung: 05.08.1992
(73) Patentinhaber: PAUL KIEFEL GMBH, D-83395 Freilassing (DE)
(72) Erfinder: Busching, Markus, Dr.-Ing., W-8229 Ainring 1 (DE)
(74) Vertreter: Patentanwälte Leinweber & Zimmermann

(56) Entgegenhaltungen:
- DE-C- 2 539 167
- GB-A- 2 230 991
- US-A- 4 086 122

## Beschreibung

Die Erfindung bezieht sich auf den Schwingkopf einer Vibrationsschweißmaschine zum Verbinden zweier relativ zueinander bewegbarer Kunststoff-Formteile, in Form eines schwingungsfähigen Systems mit einem starren Schwingkopfgehäuse, einer Schwingplatte mit einer Haltevorrichtung für einen der beiden Kunststoff-Formteile und mit Blattfedern, die zur Ausbildung des schwingungsfähigen Systems mit ihrem einen Ende an dem starren Schwingkopfgehäuse festgelegt und mit ihrem anderen Ende an der Schwingplatte fixiert sind.

Derartige Anordnungen finden bei Vibrationsschweißmaschinen Einsatz, die dem Verschweißen von Kunststoff-Formteilen, beispielsweise von zwei Halbschalen eines Hohlkörpers in einer gemeinsamen Verbindungsebene miteinander dienen und sind beispielsweise aus der US-A-4,O86,122 bekannt. Dabei werden beide Teile möglichst nahe der gewünschten Verbindungszone in Formaufnahmen festgelegt und mit einer vorbestimmbaren Kraft gegeneinander gedrückt, während die eine Formaufnahme der Vibrationsschweißmaschine gegenüber der anderen linear oszillierend verschoben wird.

Durch die Verschiebebewegung entsteht in den Verbindungszonen der beiden Kunststoff-Formteile Reibungswärme, so daS der Kunststoff dort aufgeschmolzen wird. Nach Ablauf einer vorgegebenen Vibrationszeit (Schweißzeit) wird die Relativbewegung der beiden Teilaufnahmen gegeneinander beendet, und zwar in einer Stellung, in der beide Teile in genau der gewünschten Position einander gegenüberstehen und in der sie anschließend unter Druck abkühlen. Der Erzeugung der oszillierenden Relativbewegung zwischen den beiden Teileaufnahmen dient in der Vibrationsschweißmaschine nach der US-A-4,O86,122 ein hydro-akustischer Antrieb. Aufgrund der Steifigkeit der Blattfedern, die jeweils eine Mehrzahl von zu einer Blattfedereinheit zusammengefaßten Federelementen bestehen, liegt die Vibrationsamplitude dort bei 1 bis 1 1/2 mm und die Frequenz bei 25O bis 3OO Hz, also in engen Grenzen. Bei Herstellung der durch solche Blattfedereinheiten gebildeten Federpakete wird von Stahlblöcken ausgegangen, nämlich durch Herausfräsen aus dem Vollen. Die mechanisch am höchsten beanspruchten Zonen an den Federwurzeln werden dabei durch Kugelstrahlen verfestigt, das Federpaket wird gehärtet bzw. vergütet und allseitig geschliffen. Die Herstellung ist schon deshalb mit einem erheblichen Aufwand verbunden. Zu berücksichtigen ist ferner, daß der gesamte Schwingkopf, einschließlich der oberen Teileaufnahme und des oberen Formteils ein schwingungsfähiges Gebilde darstellt, das beim Schweißvorgang mit annähernd seiner Eigenfrequenz schwingt, so daß die Federstege der ausgefrästen Federpakete alle in engen Toleranzen die gleiche Federsteifigkeit aufweisen müssen, und daß sie mit einer hohen Bearbeitungsgenauigkeit herzustellen sind. Diese Blattfederpakete stellen somit den aufwendigsten Teil des Schwingkopfes dar. Diese Tatsache ist dann besonders gravierend, wenn es zu einem Federbruch kommt. Dann bedarf es des Ersatzes eines ganzen Federpakets. Beachtlich ist ferner, daß eine Anpassung der Federsteifigkeit an die jeweiligen Bedürfnisse, beispielsweise bei Verarbeitung eines zu schweißenden Kunststoffteils vergleichsweise größeren oder kleineren Gewichts nicht möglich ist, so daß es erforderlich ist, die Eigenfrequenz zu ändern.

Einen ähnlichen Aufbau besitzen Schwingköpfe nach der DE-A-25 39 167. Die Schwingplatte mit der Haltevorrichtung für den einen der beiden Kunststoff-Formteile ist bei diesen Schwingköpfen über nur zwei Blattfedern festgelegt, von denen jeweils eine an einer der einander abgewandten Stirnseiten der Schwingplatte an dieser und an dem starren Schwingkopfgehäuse angeschraubt ist.

Neben in Form von schwingungsfähigen Systemen ausgebildeten Vibrationsschweißköpfen sind aus der GB-A-2 23O 991 bzw. de GB-A-2 199 783 auch Vibrationsschweißköpfe bekannt, bei denen eine bewegliche Aufnahme für eines der miteinander zu verschweißenden Teile über eine starre mechanische Kopplung mit einem Exzenterantrieb verbunden ist. Die Führung der beweglichen Aufnahme in bezug auf ein starres Schweißkopfgehäuse wird dabei entweder über gelenkig verbundene Schubstangen oder über ein System von Blattfedern hergestellt. Im Gegensatz zu diesen starr gekoppelten Systemen, bei denen die Blattfedern lediglich die Aufgabe der Führung und der Reibkraftübertragung erfüllen, sind die Blattfedern der zuvor erörterten Systeme nach dem Oberbegriff des Patentanspruchs 1 im Betrieb hohen Anforderungen unterworfen:
Sie müssen nämlich die während des Schweiß- und des anschließenden Abkühlvorganges zwischen dem Maschinentisch und dem Schwingkopfgehäuse wirkenden hohen Fügekräfte verformungsfrei übertragen. Ferner müssen sie eine hohe Schwingamplitude der Schwingplatte gegenüber dem Gehäuse, die bei einer Frequenz von 100 Hz ca. 2 mm (d.h. gesamte Schwingweite = 4 mm) beträgt, mit hoher Lebensdauer ertragen. Nach Abschalten der Schwingungsenergiezufuhr müssen sie schließlich die erforderliche genaue Positionierung der Formteile gegeneinander durch eine hohe Rückstellkraft bewerkstelligen.

Ausgehend von dem erörterten Stand der Technik liegt der Erfindung deshalb die Aufgabe zugrunde, den Schwingkopf der eingangs genannten Art so weiter auszugestalten, daß er sich den jeweiligen Betriebsbedingungen leichter anpassen läßt und sich gleichzeitig eine wesentlich einfachere und damit kostengünstigere Herstellung und gegebenenfalls Reparatur ergibt.

Der Schwingkopf nach der Erfindung, bei dem diese Aufgabe gelöst ist, zeichnet sich im wesentlichen dadurch aus, daß die Blattfedern aus einer Mehrzahl von voneinander unabhängigen unter Bildung von Befestigungsflanschen doppel-T-profilförmig ausgestalteten Federelementen gebildet sind und daß jedes der beiden Enden jedes einzelnen Federelementes durch eine Schraubverbindung lösbar mit dem Schwingkopfgehäuse beziehungsweise mit der Schwingplatte verbunden ist. Beim Schwingkopf nach der Erfindung erfordert die Blattfederanordnung zwar eine höhere Anzahl von Befestigungsschrauben gegenüber der mit aus dem Vollen gefrästen Federpaketen. Dieser Nachteil wird aber durch die folgenden Vorteile der erfindungsgemäßen Ausführung bei weitem aufgehoben:
1. Bei Bruch eines einzelnen Federelementes braucht nur dieses, nicht wie bisher das gesamte Federpaket ausgetauscht zu werden.
2. Eine Veränderung der Gesamt-Federsteifigkeit kann nunmehrauf zwei Arten erfolgen, nämlich durch Veränderung der Breite des Einzelelementes sowie durch Veränderung der Zahl der einzelnen Federelemente im gesamten System. Dies eröffnet eine zusätzliche Möglichkeit der Beeinflussung der Eigenfrequenz des Systems, die bei der bisher üblichen Ausführung nur entweder durch Veränderung der schwingenden Masse mit Hilfe von Zusatzgewichten oder durch Veränderung der Erregerfrequenz unter Verwendung von statischen Frequenzumrichtern anstelle einer Direktspeisung aus dem Wechselstromnetz erfolgen konnte.
3. Da die einzelnen Federelemente doppel-T-profilförmig ausgestaltet sind, können sie aus einem doppel-T-förmigen Vorprofil, das in bekannter Weise durch Walzen oder Schmieden mit minimaler oder sogar ohne Spanabnahme durch eine reine Außenbearbeitung mit hoher Genauigkeit profiliert wird, durch Vereinzeln, d.h. durch Absägen oder Trennschleifen hergestellt werden.

Zweckmäßigerweise ist jeder Befestigungsflansch eines Befestigungselementes mit Gewindebohrungen für die Aufnahme von Befestigungsschrauben versehen.

Stattdessen kann jedem Befestigungsflansch auch in seinen beiden Randbereichen mindestens eine Befestigungsschraube für ein auf diesem Befestigungsflansch in Druckanlage gelangendes zweischenkliges Klemmstück mit einer Gewindebohrung im mittleren Bereich zwischen zwei benachbarten Schenkeln zugeordnet sein. Auf diese elegante Weise greift eine Schraube gleichzeitig an den Befestigungsflanschen zweier benachbarter Federelemente an. Eine besonders enge Anordnung läßt sich dabei erreichen, wenn jeder Befestigungsflansch in seinen beiden Randbereichen mindestens eine Aussparung für die Durchführung einer Befestigungsschraube (9) aufweist.

Befindet sich die Befestigungsschraube genau in der Mitte zwischen zwei aufeinanderfolgenden Federelementen, dann hat es sich als sehr günstig erwiesen, wenn das zweischenklige Klemmstück symmetrisch ausgebildet ist.

Zur Festlegung des jeweils letzten Federelementes einer Blattfederanordnung hat es sich im Hinblick auf eine bequeme Montage als sehr zweckmäßig herausgestellt, wenn das zweischenklige Klemmstück an seinem einen Schenkel mit einem sich parallel zur Achse der Gewindebohrung erstreckenden Vorsprung versehen ist, dessen Höhe in etwa der Stärke des Befestigungsflansches im vom anderen Schenkel des Klemmstücks beaufschlagten Flanschbereich entspricht. In diesem Fall wird nämlich durch die Verwendung eines Vorsprungs am einen Schenkel des Klemmstücks für eine bequeme Festlegung des letzten Federelementes und eine einheitliche Beaufschlagung auch des letzten Befestigungsflansches durch die Befestigungsschraube gesorgt.

Weitere Einzelheiten, Vorteile und Merkmale ergeben sich aus der folgenden Beschreibung anhand der beigefügten Zeichnung, auf die bezüglich aller in der Beschreibung sowie den Ansprüchen nicht näher erläuterten vorteilhaften Einzelheiten ausdrücklich Bezug genommen wird. Es zeigen:
- Fig. 1: eine Schnittansicht eines herkömmlichen Schwingkopfs mit Federpaketen entsprechend der Linie I-I der Fig. 2,
- Fig. 2: eine Schnittansicht des Schwingkopfs entsprechend der Linie II-II der Fig. 1
- Fig. 3: eine Seitenansicht eines Ausschnitts einer Federanordnung nach der Erfindung, teilweise im Schnitt, und
- Fig. 4: einen Schnitt durch die Federanordnung nach Fig. 3, entsprechend der Linie IV-IV der Fig. 3.

Wie aus der Zeichnung ersichtlich, umfaßt der veranschaulichte Schwingkopf ein starres Gehäuse 1, das über elastische schwingungsdämpfende Elemente 2 im Gestell der nicht näher dargestellten Vibrationsschweißmaschine gelagert ist. An der Unterseite des Schwingkopfs befindet sich eine Schwingplatte 3, an deren Unterseite die Grundplatte 4' für eine teilegebundene Haltevorrichtung 4 zur Festlegung eines oberen Formteils 5 angeschraubt ist.

Die Schwingplatte 3 ist in ihrem inneren Bereich in der Regel mit einem rechteckigen Durchbruch versehen, einmal aus Gewichtsgründen und zum anderen, um das Verschweißen auch tiefer Formteile dadurch zu ermöglichen, daß diese in der Schweißposition in die Schwingplatte eindringen können.

Das mit dem oberen Formteil 5 zu verschweißende untere Formteil 5' ist in einer unteren Haltevorrichtung 4' erfaßt, die auf einem Hubtisch 7 der Vibrationsschweißmaschine angeschraubt ist.

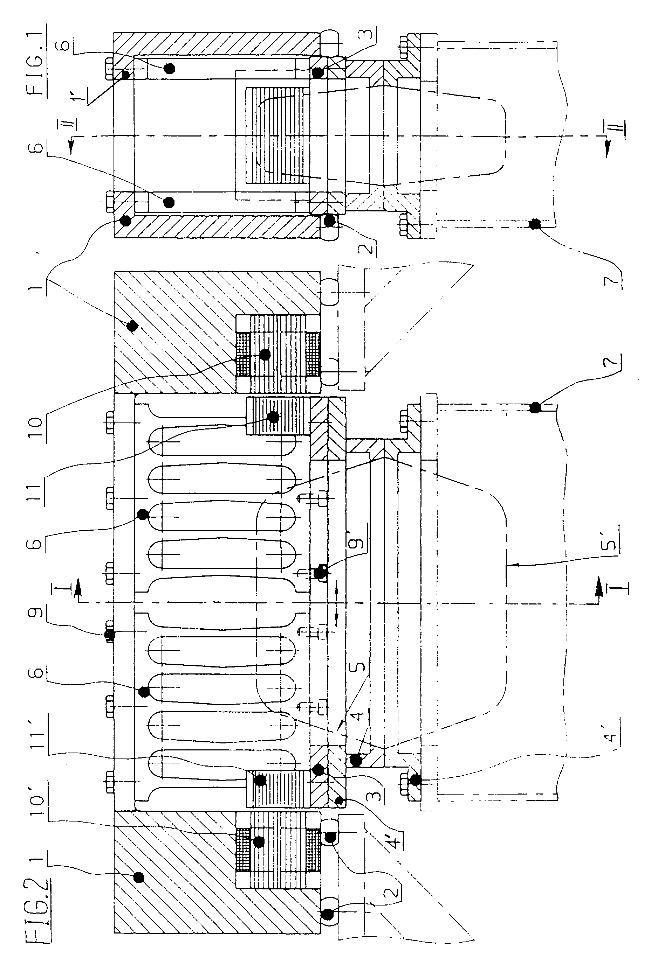

Die Verbindung zwischen dem Schwingkopfgehäuse 1 und der Schwingplatte 3 wird bei der herkömmlichen Blattfederanordnung nach den Fig. 1 und 2 durch jeweils zwei an den beiden Längsseiten der Schwingplatte 3 angreifende kompakte Pakete von parallel angeordneten Blattfederelementen 6 bewirkt. Die Befestigung der Federpakete an der Schwingplatte 3 einerseits und am Flansch 1' des Schwingkopfgehäuses 1 andererseits erfolgt mittels in Gewindebohrungen der Federpakete stirnseitig eingeschraubter Zugschrauben 9 und 9'.

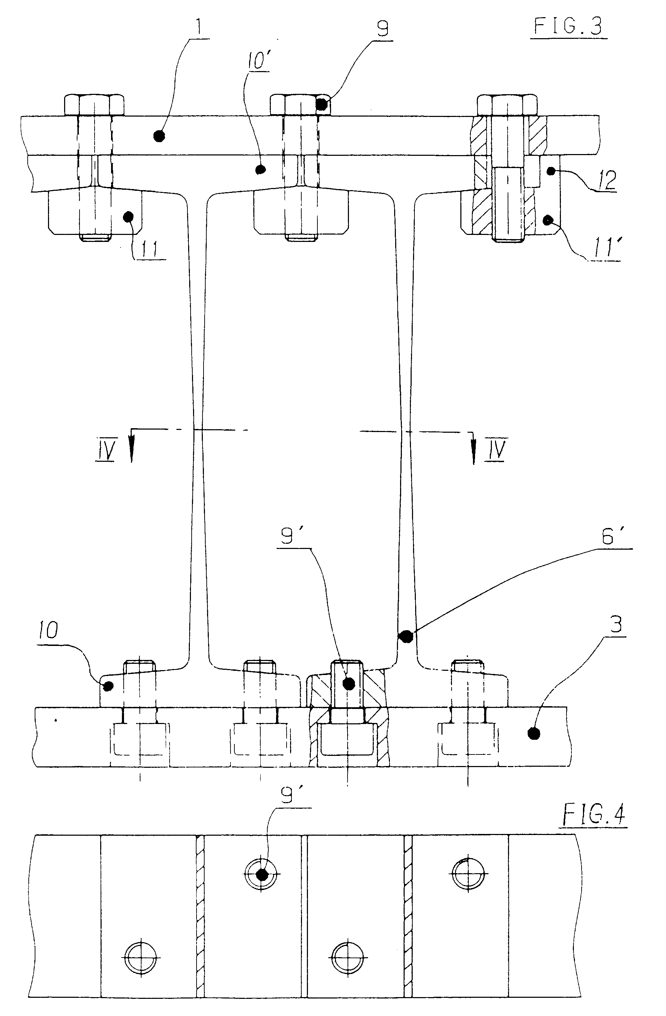

Wie aus den Fig. 3 und 4 ersichtlich, umfaßt die Blattfederanordnung nach der Erfindung eine Mehrzahl einzelner, etwa doppel-T-förmig ausgebildeter Federelemente 6', die jeweils an ihren Stirnseiten mit dem Schwingkopfgehäuse 1 bzw. der Schwingplatte 3 verschraubt sind, und zwar mittels Befestigungsschrauben 9 bzw. 9'.

In Fig. 3 sind zwei verschiedene denkbare Anordnungen der Befestigungsschrauben 9, 9' für die Federelemente 6' veranschaulicht. Fig. 4 zeigt, daß sie an der Schwingplatte 3 diagonal versetzt angeordnet sind und in Gewindebohrungen eingreifen, die in den Befestigungsflanschen 10 der Federelemente 6' angebracht sind.

Zur Befestigung an dem Flansch des Schwingkopfgehäuses 1 sind dagegen Klemmstücke 11 und 11' vorgesehen, die auf die Befestigungsflansche 10' jeweils zweier benachbarter Federelemente 6' drücken, so daß anstelle von Gewindebohrungen in den Befestigungsflanschen 10' lediglich halbrunde Aussparungen in deren Randzonen angebracht werden müssen. Dies führt zu einer weiteren Kostenreduzierung bei der Herstellung der Federelemente.

Jedes Klemmstück 11 bzw. 11' ist zweischenklig ausgestaltet. Für die Festlegung der Befestigungsflansche 10 zweier aufeinanderfolgender Federelemente 6' finden Klemmstücke 11 Verwendung, die symmetrisch ausgebildet sind. Für die Festlegung des äußeren Befestigungsflansches des jeweils letzten Federelements 6' einer Federelementreihe ist das zweischenklige Klemmstück 11' an seinem einen Schenkel mit einem sich parallel zur Achse der Gewindebohrung erstreckenden Vorsprung 12 versehen, dessen Höhe in etwa der Stärke des Befestigungsflansches im vom anderen Schenkel des Klemmstücks 11' beaufschlagten Bereich entspricht.

## Patentansprüche

1. Schwingkopf einer Vibrationsschweißmaschine zum Verbinden zweier relativ zueinander bewegbarer Kunststoff-Formteile (5, 5'), in Form eines schwingungsfähigen Systems mit einem starren Schwingkopfgehäuse (1), einer Schwingplatte (3) mit einer Haltevorrichtung (4) für einen der beiden Kunststoff-Formteile (5, 5') und mit Blattfedern, die zur Ausbildung des schwingungsfähigen Systems mit ihrem einen Ende an dem starren Schwingkopfgehäuse festgelegt und mit ihrem anderen Ende an der Schwingplatte (3) fixiert sind, dadurch gekennzeichnet, daß die Blattfedern aus einer Mehrzahl von voneinander unabhängigen, unter Bildung von Befestigungsflanschen (1O, 1O') doppel-T-profilförmig ausgestalteten Federelementen (6') gebildet sind und daß jedes der beiden Enden jedes einzelnen Federelementes durch eine Schraubverbindung (9, 9') lösbar mit dem Schwingkopfgehäuse (1) beziehungsweise mit der Schwingplatte (3) verbunden ist.

2. Schwingkopf nach Anspruch 1, dadurch gekennzeichnet, daß jeder Befestigungsflansch (1O) eines Befestigungselementes mit Gewindebohrungen für die Aufnahme von Befestigungsschrauben (9') versehen ist.

3. Schwingkopf nach Anspruch 1, dadurch gekennzeichnet, daß jedem Befestigungsflansch (1O') in seinen beiden Randbereichen jeweils mindestens eine Befestigungsschraube (9) für ein auf diesem Befestigungsflansch in Druckanlage gelangendes zweischenkliges Klemmstück (11) mit einer Gewindebohrung im mittleren Bereich zwischen zwei benachbarten Schenkeln zugeordnet ist.

4. Schwingkopf nach Anspruch 3, dadurch gekennzeichnet, daß jeder Befestigungsflansch in seinen beiden Randbereichen mindestens eine Aussparung für die Durchführung einer Befestigungsschraube (9) aufweist.

5. Schwingkopf nach Anspruch 3 oder 4, dadurch gekennzeichnet, daß das zweischenklige Klemmstück (11) symmetrisch ausgebildet ist.

6. Schwingkopf nach Anspruch 3, dadurch gekennzeichnet, daß das zweischenklige Klemmstück (11) an seinem einen Schenkel mit einem sich parallel zur Achse der Gewindebohrung erstreckenden Vorsprung (12) versehen ist, dessen Höhe in etwa der Stärke des Befestigungsflansches (1O') im vom anderen Schenkel des Klemmstücks (11') beaufschlagten Flanschbereich entspricht.

## Claims

1. Vibrating head of a vibration welding machine for joining two plastic mouldings (5,5') which are movable in relation to each other, in the form of a vibratory system having a rigid vibrating head housing (1), a vibrating plate (3) with a holding device (4) for one of the two plastic mouldings (5,5') and having leaf springs, which for forming the vibratory system are secured by their one end on the rigid vibrating head housing and are fixed by their other end on the vibrating plate (3), characterized in that the leaf springs are formed from a plurality of spring elements (6') which are independent of one another and are designed in the shape of a double-T profile, forming fastening flanges (10,10'), and in that each of the two ends of each individual spring element is releasably connected by a screw connection (9, 9') to the vibrating head housing (1) and to the vibrating plate (3).

2. Vibrating head according to Claim 1, characterized in that each fastening flange (10) of a fastening element is provided with threaded bores for receiving fastening screws (9').

3. Vibrating head according to Claim 1, characterized in that each fastening flange (10') is respectively assigned in both its edge regions at least one fastening screw (9) for a two-legged clamping piece (11) which comes into pressure-applying contact on this fastening flange and has a threaded bore in the central region between two neighbouring legs.

4. Vibrating head according to Claim 3, characterized in that each fastening flange has in both its edge regions at least one clearance for the leading through of a fastening screw (9).

5. Vibrating head according to Claim 3 or 4, characterized in that the two-legged clamping piece (11) is symmetrically designed.

6. Vibrating head according to Claim 3, characterized in that the two-legged clamping piece (11) is provided on its one leg with a projection (12) which extends parallel to the axis of the threaded bore and the height of which corresponds approximately the thickness of the fastening flange (10') in the flange region acted upon by the other leg of the clamping piece (11').

## Revendications

1. Tête oscillante d'une machine de soudage à vibrations pour relier deux pièces usinées en matière synthétique (5, 5') déplaçables relativement l'une vers l'autre, sous la forme d'un système apte à osciller, comprenant un boîtier de tête oscillante rigide (1), une plaque oscillante (3) avec un dispositif de retenue (4) pour l'une des deux pièces usinées en matière synthétique (5, 5') et avec des ressorts à lame qui, pour réaliser le système apte à osciller sont fixés à l'une de leurs extrémités au boîtier de tête oscillant rigide et à leur autre extrémité à la plaque oscillante (3), caractérisée en ce que les ressorts à lame sont constitués par plusieurs éléments à ressort (6') indépendants les uns des autres, réalisés sous forme de profil en double T constituant des brides de fixation (10, 10'), et en ce que chacune des deux extrémités de chaque élément à ressort distinct est reliée par un assemblage par vissage (9, 9') amoviblement au boîtier de tête oscillante (1) et avec la plaque oscillante (3), respectivement.

2. Tête oscillante selon la revendication 1, caractérisée en ce que chaque bride de fixation (10) d'un élément de fixation est pourvue de perçages filetés pour la réception de boulons de fixation (9').

3. Tête oscillante selon la revendication 1, caractérisée en ce qu'il est associé à chaque bride de fixation (10') dans ses deux zones de bord respectivement au moins un boulon de fixation (9) pour une pièce de serrage à deux branches (11) s'appliquant par pression sur cette bride de fixation, avec un perçaqe fileté dans la zone médiane entre deux branches avoisinantes.

4. Tête oscillante selon la revendication 3, caractérisée en ce que chaque bride de fixation présente dans ses deux zones de bord au moins un évidement pour le passage d'un bouton de fixation (9).

5. Tête oscillante selon la revendication 3 ou 4, caractérisée en ce que la pièce de serrage (11) à deux branches est réalisée de façon symétrique.

6. Tête oscillante selon la revendication 3, caractérisée en se que la tête de serrage (11) à deux branches est pourvue à l'une de ses branches d'une saillie (12) s'étendant parallèlement à l'axe du perçage fileté dont la hauteur correspond à Peu près à l'épaisseur de la bride de fixation (10') dans la zone de bride sollicitée par l'autre branche de la pièce de serrage (11').
